# EUROPÄISCHE PATENTSCHRIFT

(11) **EP 0 697 681 B1**
(45) Veröffentlichungstag und Bekanntmachung des Hinweises auf die Patenterteilung: **30.08.2000**
(21) Anmeldenummer: 95111654.0
(22) Anmeldetag: 25.07.1995
(51) Int. Cl.: G07C 7/00, G01P 1/14

(54) **Fahrtschreiber mit Mitteln zur geräteseitigen Befestigung eines den Geberleitungen zugeordneten Schutzrohres**
Tachograph with means for fixing a protective tube to the apparatus associated with sensor lines
Tachygraphe avec moyens de fixation à l'appareil d'un tube de protection associé aux lignes des capteurs

(30) Priorität: 20.08.1994 DE 9413475 U
(43) Veröffentlichungstag der Anmeldung: 21.02.1996
(73) Patentinhaber: Mannesmann VDO AG, 60326 Frankfurt (DE)
(72) Erfinder: Rahn, Horst, D-78048 Villingen-Schwenningen (DE)

(56) Entgegenhaltungen:
- EP-A- 0 194 825
- DE-C- 4 202 583
- DE-U- 9 315 970
- US-A- 5 006 960
- US-A- 5 221 813
- US-A- 5 315 062

## Beschreibung

Die Erfindung betrifft einen Fahrtschreiber mit Mitteln zur geräteseitigen Befestigung eines den Geberleitungen zugeordneten Schutzrohres, wobei die Geberleitungen mit einem Stecker abgeschlossen sind, welcher an seinem Sitz in einem an der Rückwand des Fahrtschreibers zugänglichen Steckersockel durch eine an der Rückwand befestigte und plombierte Haube gegen Abziehen gesichert ist.

Die in Kraftfahrzeugen eingesetzten Fahrtschreiber, deren Aufzeichnungen im wesentlichen der Kontrolle der Betriebsweise und des Nutzungsgrades des Fahrzeuge sowie als Arbeitszeit- und Pausennachweis für die auf den Fahrzeugen tätigen Fahrer dienen, sind bekanntlich vielfältigen Manipulationen ausgesetzt mit dem Ziel, die Aufzeichnungen zu beeinflussen oder nicht zustande kommen zu lassen.

Aus dem Dokument DE-U-9315970 ist ein Fahrtschreiber bekannt, bei dem die Geberleitungen mit einem gegen Abziehen gesicherten Stecker abgeschlossen sind, welcher mit einem im Fahrtschreibergehäuse vorgesehenen Steckersockel verbindbar ist. Im Fahrtschreibergehäuse ist eine Öffnung für das Durchführen des Steckers ausgespart, welche durch ein den Stecker fixierendes, mit einer Öffnung für die Durchführung der Geberleitungen versehenes plombierbares Wandelement verschließbar ist.

Eine entscheidende Schwachstelle stellen diesbezüglich die Leitungen zwischen einem Fahrtschreiber und dem diesem zugeordneten, die wegabhängigen Impulse liefernden Geber dar. Um den Zugang zu den Leitungen erheblich zu erschweren ist es naheliegend, die Leitungen in einem flexiblen metallischen Schutzrohr zu verlegen. Derartige Schutzrohre sind jedoch teuer und bieten infolge der erforderlichen separaten Befestigung und erschwerter Montagebedingungen aufgrund der trotz flexibler Ausbildung relativ hohen Steifigkeit einen erheblichen zusätzlichen Montageaufwand.

Demzufolge sind bisher im wesentlichen nur passive Lösungen angewandt worden, die es durch geeignete Registrierung ermöglichen, daß im nachhinein festgestellt werden kann, daß Manipulationen erfolgt sind. Soll trotz der geschilderten Schwierigkeiten ein aktiver Manipulationsschutz, wenigstens jedoch eine erhebliche Behinderung, Manipulationen vornehmen zu können, gegebenenfalls zusätzlich zu einem bereits realisierten Manipulationsnachweis vorgesehen werden, so kann zunächst davon ausgegangen werden, daß Änderungen innerhalb des betreffenden Gerätes nicht erforderlich sind und somit relativ gute Voraussetzungen bestehen, einen Fahrtschreiber auch nachrüsten zu können.

Die der vorliegenden Erfindung zugrunde liegende Aufgabe bestand somit darin, den bei Verwendung eines Schutzrohres für die Geberleitungen eines Fahrtschreibers erforderlichen Montageaufwand auf ein Minimum zu reduzieren.

Die Lösung der Aufgabe beschreibt der Anspruch 1. Weitere vorteilhafte Ausgestaltungen der Erfindung sind in den Unteransprüchen dargestellt.

Der entscheidende Vorteil, den die Erfindung insbesondere bezüglich einer Montage vor Ort bietet besteht darin, daß lediglich eine mit den erforderlichen Rastverbindungsmitteln versehene die Stecker des Fahrtschreibers sichernde Haube im Austausch gegen die bisher verwendete Haube am Fahrtschreiber angebracht und das Schutzrohr zuvor mit der Haube verrastet werden muß. Das Plombieren des Schutzrohres erfolgt dann mittelbar durch das Plombieren der Haube. Zweckmäßigerweise ist das Schutzrohr geberseitig mit einer mit einer Überwurfmutter zusammenwirkenden Tülle versehen, so daß eine koaxiale Festlegung des Schutzrohres an einem bereits montierten Geber zusammen mit dem Sichern der elektrischen Steckverbindung zwischen dem Geber und den Geberleitungen in einfacher und üblicher Weise mittels der Überwurfmutter erfolgen kann. Andererseits können das Schutzrohr und die Geberleitungen, was insbesondere bei Neuausrüstungen anzustreben ist, mit dem Geber derart verbunden und durch eine geeignete Vergußmasse abgedichtet sein, daß eine Baueinheit entsteht, bei der geberseitig lediglich der Geber am beispielsweise Getriebegehäuse zu befestigen ist. Dadurch werden eine Trennstelle und deren Plombieraufwand vermieden aber auch die Möglichkeit beseitigt, an dieser Trennstelle in betrügerischer Absicht einen Kurzschluß des eigentlichen Signalleiters, eine Unterbrechung eines Leiters oder eine Ankopplung einer Fremdwechselspannung vornehmen zu können.

Die geschilderte Baueinheit läßt sich in der Serienfertigung relativ gut herstellen und wird so vorkonfektioniert, daß, was die Länge des Schutzrohres und die darin verlegten Leitungen anbelangt, eine möglichst geringe Typenanzahl für die diversen Anwendungen erforderlich ist, das heißt, daß in einigen Anwendungsfällen, was unschädlich ist, das Schutzrohr in einer Schleife verlegt und diese in geeigneter Weise gegen "Aufspringen" gesichert werden muß. Vorzugsweise sind geeignete Ösen für das Anbringen von Kabelbindern unmittelbar an der Haube ausbildbar.

Im folgenden sei die Erfindung anhand der beigefügten Zeichnungen näher erläutert. Es zeigen:
Fig. 1 eine Rückansicht eines Fahrtschreibers mit einer an der Rückwand befestigten, die Steckerverbindungen des Fahrtschreibers plombierenden Haube,
Fig. 2 eine Einzelteildarstellung der Haube in einer Ansicht gemäß der Pfeilrichtung A in Fig. 1,
Fig. 3 eine Teildarstellung der Rückansicht des Fahrtschreibers gemäß Fig. 1 mit einer Varianten der des Schutzrohr abschließenden Hülse,
Fig. 4 eine Draufsicht eines weiteren Ausführungsbeispiels der Haube,
Fig. 5 eine Seitenansicht der Haube gemäß Fig. 4 mit einem Teilschnitt entsprechend der Schnittlinie B in Fig. 4,
Fig. 6 eine Draufsicht eines dritten Ausführungsbeispiels der Haube,
Fig. 7 eine Seitenansicht der Haube gemäß Fig. 6 mit einem Teilschnitt entsprechend der Schnittlinie C in Fig. 6,
Fig. 8 eine perspektivische Darstellung eines mit der Haube gemäß Fig. 6 verrastbaren, die Abschlußhülse des Schutzrohres umgreifenden Halteteils,
Fig. 9 eine perspektivische Darstellung einer Ausführungsvariante einer Abschlußhülse, welche bereits mit einem Schutzrohr verbunden ist.

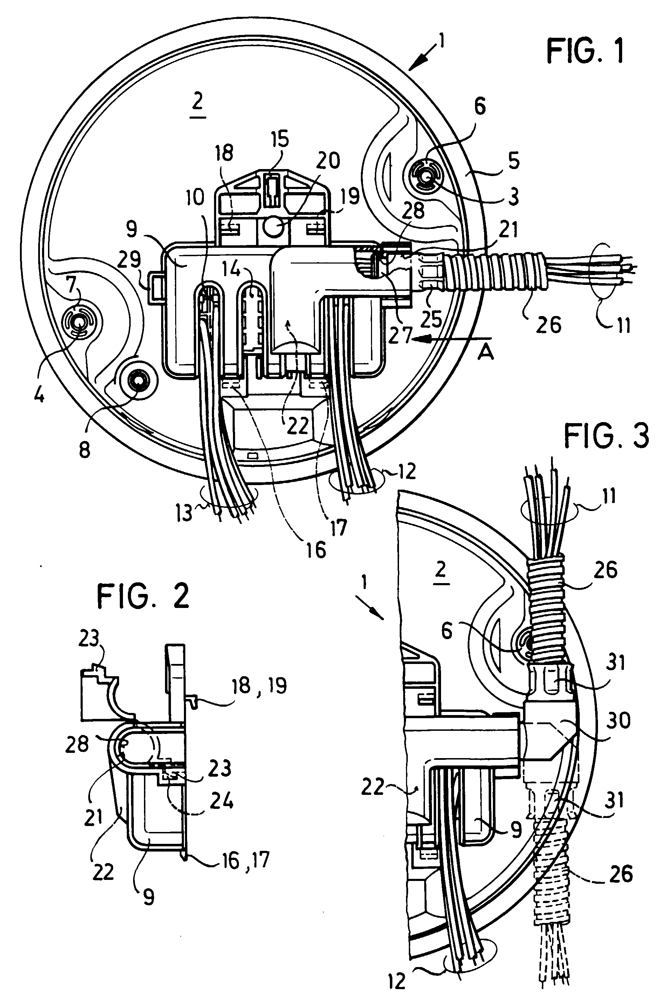

Mit 1 ist in der Fig. 1 eine topfförmige Abdeckung bezeichnet, welche einen Fahrtschreiber rückseitig abschließt, mit anderen Worten, der Boden der Abdeckung bildet die Rückwand 2 des Fahrtschreibers. Gewindebolzen 3 und 4 dienen zusammen mit einem am Gehäuse des Fahrtschreibers ausgebildeten Ansatz 5 in an sich bekannter Weise der Befestigung des Fahrtschreibers beispielsweise in einem Armaturenbrett eines Fahrzeuges. Mit 6 und 7 sind der Abdeckung zugeordnete Befestigungselemente bezeichnet, die gleichzeitig Plombierfunktion ausüben. Ein an dem Fahrtschreiber vorgesehener optischer Ausgang ist mit 8 bezeichnet.

An der Rückwand 2 ist eine Haube 9 befestigt, die dazu dient, verschiedene Stecker 10, die zu Funktionsgruppen zusammengeführte ein- und ausgehende Leitungen abschließen (Leitungsbündel 11, 12, 13) so abzudecken, daß die Stecker 10 nicht entnommen werden können oder wie bei dem dem Geberleitungsbündel 11 zugeordneten nicht dargestellten Stecker aus Gründen des Manipulationsschutzes unzugänglich abgedeckt sind. Im übrigen gestattet die kammartige Ausbildung der Haube 9 eine Leitungsbündelung bei relativ unbehinderter Leitungszuführung zu den Steckern 10. Der Vollständigkeit halber sei noch erwähnt, daß es sich bei den Steckern 10 um handelsübliche beispielsweise achtpolige Stecker, in denen Kontaktbuchsen gehaltert sind, handelt. Den Steckern 10 ist geräteseitig eine Steckerfassung 14 zugeordnet, die, wie die EP 0153632 zeigt, beispielsweise unmittelbar auf einer mit den Steckern zugeordneten Kontaktzungen bestückten Leiterplatte befestigt und durch eine Aussparung in der Abdeckung 2 zugänglich ist. Diese Aussparung wird von der Haube 9 abgedeckt. Die Befestigung der Haube 9 an der Abdeckung 2 erfolgt in Form einer Bajonettverbindung und zwar mittels mehrerer an der Haube 9 ausgebildeter Zungen 15, 16, 17, 18, 19, denen an der Abdeckung ausgeformte nicht näher bezeichnete Hinterschnitte zugeordnet sind. Die Sicherung dieser Bajonettverbindung erfolgt mittels einer mit der Haube 9 verrastbaren Plombe 20, die bei gesetzter Haube 9 in eine an der Abdeckung 2 ausgebildete Kontur eingreift.

Wie aus den Fig. 1 und 2 hervorgeht ist an der Haube 9 eine Lagerschale 21 ausgebildet, die, indem sie bis zu der Lage des betreffenden Steckers 10 in der Steckerfassung 14 erweitert ist, den Geberleitungen 11 als Leitungskanal 22 dient. Der Lagerschale 21 ist, wie Fig. 2 zeigt, ein mittels eines nicht näher bezeichneten Filmscharniers an der Haube 9 angelenkter Riegel 23 zugeordnet, der im verriegelten Zustand mit einer in der Haube 9 ausgeformten Kulisse 24 in Eingriff steht und derart ausgebildet ist, daß er, wenn die Haube 9 an der Abdeckung 2 befestigt ist, nicht mehr entriegelt werden kann. Die Lagerschale 21 dient der Aufnahme einer Abschlußhülse 25, welche mit einem den Geberleitungen 11 zugeordneten flexiblen metallischen Schutzrohr 26 verquetscht ist. Der axialen Sicherung des Schutzrohres 26, welches vorzugsweise mit einem Kunststoffüberzug versehen ist, dient eine an der Abschlußhülse 25 ausgebildete Nut 27, welcher ein in die Lagerschale 21 hineinragender Steg 28 zugeordnet ist. Es sei noch erwähnt, daß eine möglichst große Lagerlänge für das Abstützen des Schutzrohres 26 vorteilhaft ist und daß an der Haube 9 eine mit 29 bezeichnete Öse angeformt ist, an welcher eine Schleife des Schutzrohres 26 angebunden werden kann.

Die Fig. 3 zeigt eine Ausführungsvariante der Abschlußhülse in Form eines in Kunststoff gefertigten Winkelstücks 30. Um diese Abschlußhülse durch Quetschen am Schutzrohr 26 befestigen zu können, ist ein auf einen Ansatz des Winkelstücks 30 aufschiebbarer metallischer Ring 31 vorgesehen.

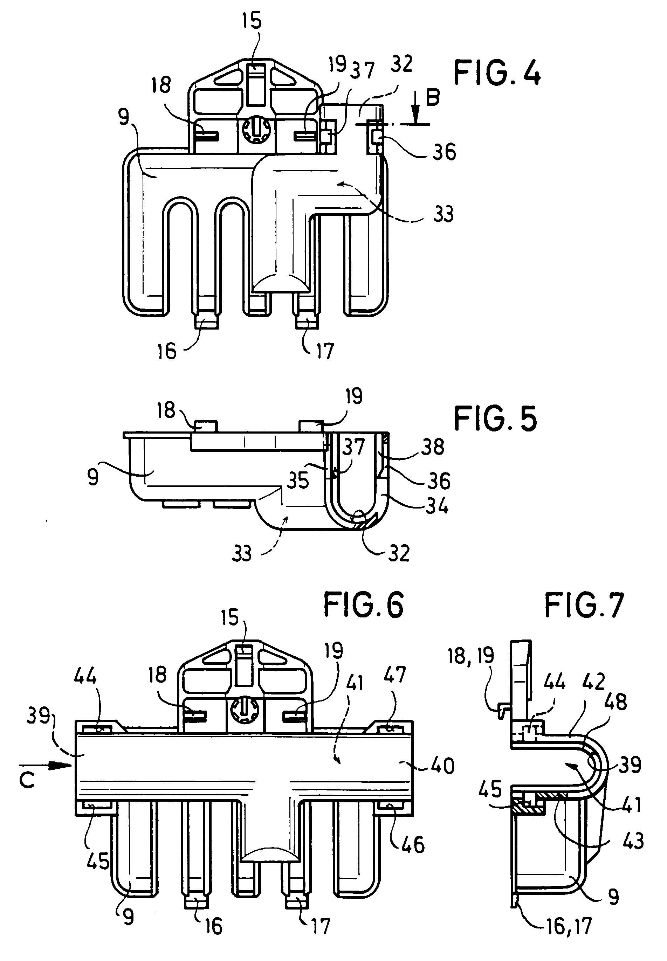

Die Fig. 4 und 5 zeigen ein Ausführungsbeispiel der Haube 9, bei dem bei sonst unveränderter Ausbildung die eine mit 32 bezeichnete Lagerschale und ein Leitungskanal 33 derart angeformt sind, daß sie im Gegensatz zu dem bereits beschriebenen Ausführungsbeispiel eine um neunzig Grad versetzte Anordnung des Schutzrohres 26 ermöglichen. Das Ausführungsbeispiel zeigt ferner, daß die eigentliche Lagerschale 32 durch Wandschenkel 34 und 35, die mit der Auflageebene der Haube 9 abschließen, zu einem u-förmigen Profil erweitert ist. Auf diese Weise ist es möglich, der Halterung eines Schutzrohres 26 dienende Klinken 36 und 37 vorzusehen, die unmittelbar an den Wandschenkeln 34 und 35 ausgeformt sind. Mit 38 ist ein Steg bzw. eine Rippe bezeichnet, die in der bereits geschilderten Weise mit der Nut 27 in der Abschlußhülse 25 zusammenwirkt.

Die Fig. 6 und 7 zeigen ein weiteres Ausführungsbeispiel der Haube 9, in dem ein Anbringen des Schutzrohres 26 aus zwei entgegengesetzten Richtungen möglich ist. Demzufolge sind zwei geometrisch auf einer Achse liegende Lagerschalen 39 und 40 ausgeformt, denen ein durchgehender Leitungskanal 41 zugeordnet ist. Bei diesem Ausführungsbeispiel sind in den Wandschenkeln der Lagerschalen 39 und 40, von denen nur die in der Fig. 7 dargestellten mit 42 und 43 bezeichnet sind, Freisparungen 44 und 45 bzw. 46 und 47 ausgeformt. Diese dienen dem Einrasten von Klinken, welche an einer in geeigneter Weise gestaltete Abschlußhülse angeformt sind.
Der axialen Sicherung einer derartigen Abschlußhülse dient wiederum ein in die Lagerschalen 39 bzw. 40 eingreifender Steg 48.

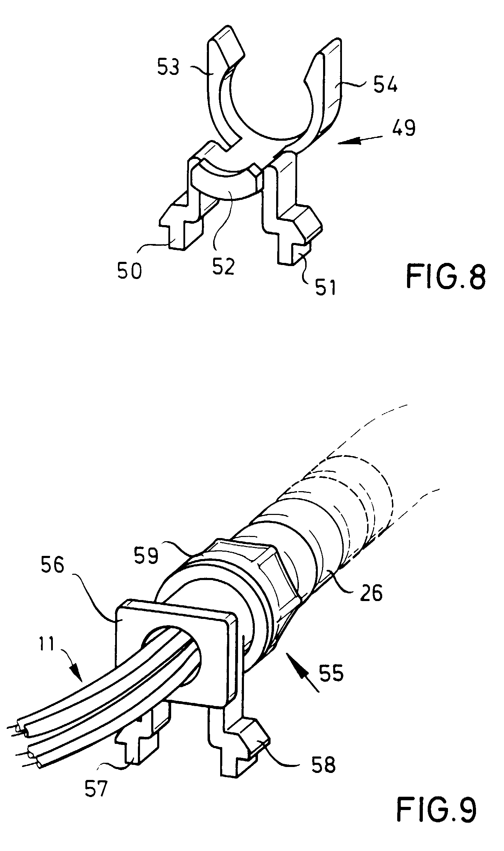

Ein in Verbindung mit einer Haube 9 gemäß dem oben geschilderten Ausführungsbeispiel und einer Abschlußhülse 25 gemäß Fig. 1 verwendbares Halteteil 49 zeigt die Fig. 8. An dem Halteteil 49 sind Klinken 50 und 51 ausgebildet, die mit den Freisparungen 44, 45 bzw. 46, 47 in Eingriff bringbar sind. Der axialen Sicherung des Halteteils 49 dient ein Stegsegment 52, das beim Zusammenfügen von Halteteil 49 und Abschlußhülse 25 in die Nut 27 der Abschlußhülse 25 eingreift. Mit 53 und 54 sind Finger bezeichnet, die bei gesetztem Halteteil 49 die Abschlußhülse 25 außerhalb der Haube 9 federnd umgreifen.

Die mit der Fig. 9 dargestellte Ausführungsvariante einer Abschlußhülse 55 wäre, wenn sie anstelle der Halteplatte 56 mit einer Nut gemäß der Abschlußhülse 25 versehen wäre, mittels der angeformten Klinken 57 und 58 unmittelbar mit der Haube 9 gemäß den Fig. 5 und 6 verbindbar. Die als Variationsmöglichkeit vorgesehene Halteplatte 56 bedingt jedoch die Ausbildung einer passenden Nut in der Haube 9. Bei dieser nur als Kunststoffteil herstellbaren Abschlußhülse 55 ist, wie bereits im Zusammenhang mit dem Winkelstück 30 beschrieben, ein metallischer Ring 59 verwendet, welcher die Quetschverbindung zwischen der Abschlußhülse 55 und dem Schutzrohr 26 ermöglicht.

## Patentansprüche

1. Fahrtschreiber mit Mitteln zur geräteseitigen Befestigung eines den Geberleitungen (11) zugeordneten Schutzrohres (26), wobei die Geberleitungen mit einem Stecker (10) abgeschlossen sind, welcher an seinem Sitz in einem an der Rückwand (2) des Fahrtschreibers zugänglichen Steckersockel (14) durch eine an der Rückwand befestigte und plombierte Haube (9) gegen Abziehen gesichert ist,
dadurch gekennzeichnet,
daß an dem Schutzrohr (26) eine das Schutzrohr (26) abschließende Hülse (25) befestigt ist,
daß an der Haube (9) eine dem Durchmesser der Abschlußhülse (25) entsprechende Lagerschale (21, 32, 39, 40) angeformt ist,
daß bei an der Rückwand (2) des Fahrtschreibers befestigter Haube (9) die Lagerschale (21, 32, 39, 40) geschlossen ist,
daß zwischen der Abschlußhülse (25) und der Haube (9) eine Steg-Nut-Verbindung (28, 27) ausgebildet ist und
daß Rastverbindungsmittel zur Lagesicherung der Abschlußhülse (25) in der Lagerschale (21, 32, 39, 40) der Haube (9) vorgesehen sind.

2. Fahrtschreiber nach Anspruch 1,
dadurch gekennzeichnet,
daß die Abschlußhülse (25) mit einer in Umfangsrichtung ausgebildeten Nut (27) versehen ist,
daß in der Lagerschale (21) ein der Nut (27) entsprechender Steg (28) angeformt ist und
daß ein Riegel (23) vorgesehen ist, welcher derart ausgebildet und an der Haube (9) gelenkig angeordnet ist, daß er in verriegeltem Zustand eine in der Lageschale (21) liegende Abschlußhülse (25) umgreift.

3. Fahrtschreiber nach Anspruch 1,
dadurch gekannzeichnet,
daß die mit einer umlaufenden Nut versehene Abschlußhülse als Winkelstück (30) ausgebildet ist.

4. Fahrtschreiber nach Anspruch 1,
dadurch gekennzeichnet,
daß die Lagerschale (32) durch ebene Wandschenkel (34, 35) u-förmig profiliert ausgebildet ist und
daß in den Wandschenkeln (34, 35) der Lagerschale (32) Klinken (36, 37) ausgeformt sind, welche in den Einsteckweg der Abschlußhülse (25) hinein ragen.

5. Fahrtschreiber nach Anspruch 1,
dadurch gekennzeichnet,
daß die Lagerschale (39) durch ebene Wandschenkel u-förmig profiliert ausgebildet ist und
daß in den Wandschenkeln der Lagerschale (39) Klinken zugeordnete Freisparungen (44, 45) ausgebildet sind.

6. Fahrtschreiber nach Anspruch 5,
dadurch gekennzeichnet,
daß Klinken (57, 58) an der Abschlußhülse (55) ausgebildet sind und
daß der aus Kunststoff hergestellten Abschlußhülse (55), zu deren Befestigung am Schutzrohr (26) durch Quetschen, ein metallischer Ring (59) zugeordnet ist.

7. Fahrtschreiber nach Anspruch 5,
dadurch gekennzeichnet,
daß zum Festhalten des Schutzrohres (26) an der Haube (9) ein Halteteil (49) vorgesehen ist, an welchem mit den Freisparungen (44, 45) zusammenwirkende Klinken (50, 51) und dem Verbinden mit der Abschlußhülse (25) dienende federnde Finger (53, 54) angeformt sind.

8. Fahrtschreiber nach Anspruch 1,
dadurch gekennzeichnet,
daß die Lagerschale durch ebene Wandschenkel u-förmig profiliert ausgebildet ist,
daß die Abschlußhülse (25) mit einer in Umfangsrichtung ausgebildeten Nut (27) versehen ist und
daß wenigstens der der Nut (27) in der Abschlußhülse (25) zugeordnete, an der Lagerschale nach innen weisend angeformte Steg mit sich gegenüberliegenden Rastnasen versehen ist.

## Claims

1. Tachograph having means for the device-side fastening of a protective tube (26) assigned to the transducer lines (11), the transducer lines being terminated with a plug (10) which, at its seat in a plug receptacle (14) accessible at the rear wall (2) of the tachograph, is secured against being pulled off by a lead-sealed hood (9) fastened to the rear wall,
characterized
in that a sleeve (25) terminating the protective tube (26) is fastened to the protective tube (26),
in that a bearing shell (21, 32, 39, 40) corresponding to the diameter of the terminating sleeve (25) is integrally formed on the hood (9),
in that the bearing shell (21, 32, 39, 40) is closed when the hood (9) is fastened to the rear wall (2) of the tachograph,
in that a ridge/groove connection (28, 27) is constructed between the terminating sleeve (25) and the hood (9) and
in that locking connection means for securing the position of the terminating sleeve (25) in the bearing shell (21, 32, 39, 40) of the hood (9) are provided.

2. Tachograph according to Claim 1,
characterized
in that the terminating sleeve (25) is provided with a groove (27) constructed in the circumferential direction,
in that a ridge (28) corresponding to the groove (27) is integrally formed in the bearing shell (21) and
in that a locking element (23) is provided which is constructed and articulatedly arranged on the hood (9) in such a way that, in the locked state, it embraces a terminating sleeve (25) lying in the bearing shell (21).

3. Tachograph according to Claim 1,
characterized
in that the terminating sleeve provided with a circumferential groove is constructed as an angle piece (30).

4. Tachograph according to Claim 1,
characterized
in that the bearing shell (32) is constructed in such a way that it is given a U-shaped profile by plane wall sides (34, 35) and in that detents (36, 37) are formed in the wall sides (34, 35) of the bearing shell (32), the detents projecting into the insertion path of the terminating sleeve (25).

5. Tachograph according to Claim 1,
characterized
in that the bearing shell (39) is constructed in such a way that it is given a U-shaped profile by plane wall sides and
in that recesses (44, 45) assigned to detents are constructed in the wall sides of the bearing shell (39).

6. Tachograph according to Claim 5,
characterized
in that detents (57, 58) are constructed on the terminating sleeve (55) and
in that a metallic ring (59) is assigned to the terminating sleeve (55), produced from plastic, in order to fasten the latter to the protective tube (26) by crimping.

7. Tachograph according to Claim 5,
characterized
in that a holding part (49) is provided for firmly holding the protective tube (26) on the hood (9), detents (50, 51) which cooperate with the recesses (44, 45), and resilient fingers (53, 54) which serve for connection to the terminating sleeve (25) being integrally formed on the holding part (49).

8. Tachograph according to Claim 1,
characterized
in that the bearing shell is constructed in such a way that it is given a U-shaped profile by plane wall sides and
in that the terminating sleeve (25) is provided with a groove (27) constructed in the circumferential direction and
in that at least the ridge, which is assigned to the groove (27) in the terminating sleeve (25) and integrally formed in an inwardly pointing manner on the bearing shell, is provided with mutually opposite locking lugs.

## Revendications

1. Enregistreur de route avec des moyens pour, du côté appareil, la fixation d'un conduit de protection (26) associé aux conducteurs électriques de capteur (11), lesdits conducteurs électriques de capteur étant terminés par un connecteur (10) qui, sur son siège dans un socle de connecteur (14) accessible au panneau arrière (2) dudit enregistreur de route, est protégé contre la déconnexion par un capot (9) fixé sur ledit panneau arrière et plombé,
caractérisé par le fait
que sur le conduit de protection (26) est fixée une douille (25) terminant ledit conduit de protection (26),
que sur le capot (9) est formée une coquille de support (21, 32, 39, 40) correspondant au diamètre de la douille d'extrémité (25),
que, lorsque le capot (9) est fixé sur le panneau arrière (2) de l'enregistreur de route, la coquille de support (21, 32, 39, 40) est fermée,
que, entre la douille d'extrémité (25) et le capot (9) est formé un assemblage à rainure et languette (28, 27) et que des moyens d'assemblage par enclenchement pour l'immobilisation positionnelle de la douille d'extrémité (25) sont prévus dans la coquille de support (21, 32, 39, 40) du capot (9).

2. Enregistreur de route selon la revendication 1,
caractérisé par le fait
que la douille d'extrémité (25) est pourvue d'une rainure (27) pratiquée dans le sens circonférentiel,
que dans la coquille de support (21) est formée une nervure (28) correspondant à ladite rainure (27) et qu'il est prévu un verrou (23) qui est réalisé de telle sorte et articulé sur le capot (9) que, dans l'état verrouillé, il enveloppe une douille d'extrémité (25) disposée dans la coquille de support (21).

3. Enregistreur de route selon la revendication 1,
caractérisé par le fait
que la douille d'extrémité pourvue d'une rainure continue est réalisée comme pièce coudée (30).

4. Enregistreur de route selon la revendication 1,
caractérisé par le fait
que la coquille de support (32) est réalisée profilée en forme de U par des branches de paroi planes (34, 35) et
que dans lesdites branches de paroi (34, 35) de ladite coquille de support (32) sont pratiqués des cliquets (36, 37) qui pénètrent dans le trajet d'enfichage de la douille d'extrémité (25)

5. Enregistreur de route selon la revendication 1,
caractérisé par le fait
que la coquille de support (39) est réalisée profilée en forme de U par des branches de paroi planes (34, 35) et
que dans lesdites branches de paroi de la coquille de support (39) sont pratiqués des évidements (44, 45) associés à des cliquets.

6. Enregistreur de route selon la revendication 5,
caractérisé par le fait
que des cliquets (57, 58) sont formés sur la douille d'extrémité (55) et
qu'à ladite douille d'extrémité (55) fabriquée en matière plastique est associée une bague métallique (59) pour la fixation par sertissage de ladite douille d'extrémité (55) sur le conduit de protection (26).

7. Enregistreur de route selon la revendication 5,
caractérisé par le fait
que pour l'immobilisation du conduit de protection (26) sur le capot (9) est prévue une pièce de fixation (49) sur laquelle sont formés des cliquets (50, 51) coopérant avec les évidements (44, 45) et des doigts élastiques (53, 54) servant à l'assemblage avec la douille d'extrémité (25).

8. Enregistreur de route selon la revendication 1,
caractérisé par le fait
que la coquille de support est profilée en forme de U par des branches de paroi planes,
que la douille d'extrémité (25) est pourvue d'une rainure (27) réalisée dans le sens circonférentiel et
que, au moins la nervure associée à la rainure (27) dans la douille d'extrémité (25), formée sur la coquille de support et dirigée vers l'intérieur, est pourvue de languettes d'arrêt situées à l'opposé l'une de l'autre.
